Europäisches Patentamt

European Patent Office

Office européen des brevets

(11) Veröffentlichungsnummer: **0 089 473**
A2

# (12) EUROPÄISCHE PATENTANMELDUNG

(21) Anmeldenummer: 83100958.4

(22) Anmeldetag: 02.02.83

(51) Int. Cl.³: **H 04 Q 7/04**

(30) Priorität: 19.03.82 DE 3210077

(43) Veröffentlichungstag der Anmeldung:
28.09.83 Patentblatt 83/39

(84) Benannte Vertragsstaaten:
AT DE FR GB NL

(71) Anmelder: ROBERT BOSCH GMBH
Postfach 50
D-7000 Stuttgart 1(DE)

(72) Erfinder: Dallmann, Horst
Wiersichweg 5
D-1000 Berlin 13(DE)

(74) Vertreter: Schmidt, Hans-Ekhardt
Robert Bosch GmbH Geschäftsbereich Elektronik
Patent- und Lizenzabteilung Forckenbeckstrasse 9-13
D-1000 Berlin 33(DE)

(54) Funktelefonsystem.

(57) Es wird ein Funktelefonsystem mit mehreren ortsfesten (13 bis 16) und mehreren mobilen Sende/Empfangsstationen (11) vorgeschlagen, wobei die ortsfesten Stationen (13 bis 16) über eine Überleiteinrichtung (25) mit dem Telefonnetz (26) in Verbindung stehen. Die mobilen Stationen (11) weisen eine automatische, zyklische Abtastvorrichtung für die Funkkanäle (K1 bis K4) zur Anrufsuche auf (Scanner). Bei einem Anruf an eine mobile Station (11) werden über alle ortsfesten Stationen (13 bis 16) bzw. Kanäle (K1 bis K4) Stoppsignale für die Abtastvorrichtungen der mobilen Stationen (11) abgesendet, denen jeweils Selektivrufsignale für eine mobile Station (11) nachfolgen. Kommt dann eine Funkverbindung zustande, vorzugsweise nach Absendung eines Quittungssignals durch die angesprochene mobile Station, so werden über alle freien Funkkanäle zu ihrer Erkennung durch die übrigen mobilen Stationen Pilottöne abgesendet, die in den mobilen Stationen (11) gespeichert werden. Dadurch wird zum einen bestimmte mobile Station schnell und zuverlässig erreicht und darüber hinaus verhindert, daß im umgekehrten Fall ein Gespräch von einer mobilen Station (11) aus einem belegten Kanal vergeblich eröffnet wird. Der Hardware-Aufwand dieser Anordnung wird durch Mehrfachnutzung von Schaltkreisen sehr gering gehalten.

Fig. 1

10/82
EK/PLI Ve/Li
18.3.1982

ROBERT BOSCH GMBH, 7000 Stuttgart 1

Funktelefonsystem

Stand der Technik

Die Erfindung geht aus von einem Funktelefonsystem nach der Gattung des Hauptanspruchs.

Funktelefonsysteme, bei denen Anschlüsse eines Telefonnetzes über eine Überleiteinrichtung mit verschiedenen ortsfesten Stationen für die verschiedenen Funkkanäle verbunden sind, sind bereits vielfältig realisiert und dienen dazu, Verbindungen zwischen dem Telefonnetz und mobilen Sende/Empfangsstationen, insbesondere in Fahrzeugen, herzustellen. Durch die Mobilität der Fahrzeuge ist es für die Verbindung von beiden Seiten aus problematisch, einen freien Funkkanal zu finden, über den unter Berücksichtigung des augenblicklichen Standorts der mobilen Station eine Verbindung möglich ist. Bekannte Überleiteinrichtungen ordnen beispielsweise jeweils einen bestimmten Fernsprecheingang des Telefonnetzes einer bestimmten ortsfesten Station zu. Es ist daher erforderlich, denjenigen Fernsprecheingang anzuwählen, dessen zugeordnete ortsfeste Station eine Funkverbindung zur gewünschten mobilen Station herstellen kann. Auf der Seite der mobilen Stationen ist es oft aufwendig, umständlich und zeitraubend, einen freien Funkkanal zu finden, über den aufgrund des augenblicklichen Standorts eine Verbindung möglich ist.

## Vorteile der Erfindung

Das erfindungsgemäße Funktelefonsystem mit den kennzeichnenden Merkmalen des Hauptanspruchs hat demgegenüber den Vorteil, daß eine erwünschte Funkverbindung von jeder Seite aus schnell und automatisch gefunden wird, indem bei einem Anruf vom Telefonnetz aus an eine mobile Station mit unbekanntem Standort über alle ortsfesten Stationen (Kanäle) Funksignale abgesetzt werden. Diese enthalten zunächst ein Stoppsignal für in den mobilen Stationen vorhandene Funkkanal-Abtastvorrichtungen zur Anrufsuche, die automatisch und zyklisch arbeiten (Scanner). Die Abtastvorrichtungen halten den Funkempfänger auf demjenigen Kanal fest, über den das Stoppsignal empfangen wird. Das dem Stoppsignal nachfolgende Selektivrufsignal spricht jedoch nur eine einzige mobile Station an, die auf dem ermittelten Funkkanal nunmehr festgeschaltet wird und eine Quittung zurücksendet. Daraufhin wird über diesen Kanal die Sprechverbindung aufgebaut. Über die übrigen freien Funkkanäle wird zu ihrer Erkennung durch die nicht gerufenen mobilen Stationen ein Pilotton abgesendet, dessen Empfang in diesen mobilen Stationen gespeichert wird. Will eine mobile Station nun von sich aus eine Funkverbindung zum Telefonnetz aufbauen, liegt bereits die Information vor, welcher Kanal möglich und frei ist.

Durch die in den Unteransprüchen aufgeführten Maßnahmen sind vorteilhafte Weiterbildungen und Verbesserungen des im Hauptanspruch angegebenen Funktelefonsystems möglich.

Besonders vorteilhaft ist auch eine zusätzliche zyklische Absendung solcher Pilottöne, wobei der Aufwand besonders gering wird, wenn die Stoppsignale und die Pilottöne dieselbe Frequenz aufweisen.

Da oftmals durch eine mobile Station Pilottöne verschiedener
ortsfester Stationen, das heißt auf verschiedenen Kanälen,
empfangen werden, ist es weiterhin besonders vorteilhaft,
diese bezüglich ihrer Empfangsfeldstärke zu bewerten und
jeweils den Funkkanal einzuspeichern, auf dem ein Pilotton
mit der größten Empfangsfeldstärke empfangen wurde.

Weiterhin ist es besonders vorteilhaft, die Überleiteinrichtung zwischen Telefonnetz und ortsfesten Funkstationen durch
einen Rechner zu steuern, der eine Multiplexeinrichtung aufweist, durch die jeder Fernsprecheingang des Telefonnetzes
mit jeder ortsfesten Station (Funkkanal) verbindbar ist. Dadurch kann ein beliebiger Fernsprecheingang angewählt werden,
um eine beliebige mobile Station zu erreichen. Die entsprechenden Verbindungen werden nach Feststellung eines richtigen
Funkkanals über die Multiplexeinrichtung geschaffen. Obwohl
diese Maßnahmen eine vorteilhafte Weiterbildung der Erfindung
darstellen, weisen sie auch für sich eine selbständige
erfinderische Bedeutung auf. Die Überleiteinrichtung weist
vorteilhaft weiterhin einen Speicher auf, in dem eine Zuordnung jeder mobilen Station zu einem Funkkanal, über den eine
Verbindung möglich ist, gespeichert werden kann. Dies erfolgt
jeweils dann, wenn eine Verbindung mit dieser Station
zustande kommt. Eine solche Verbindung kann für den Zweck der
Einspeicherung zyklisch von der mobilen Station aufgebaut
werden oder auch jeweils dann erfolgen, wenn ein Anruf von
einer Seite zur anderen erfolgt.

Zeichnung

Ein Ausführungsbeispiel der Erfindung ist in der Zeichnung
dargestellt und in der nachfolgenden Beschreibung näher erläutert.

Es zeigen

Fig. 1   ein Ausführungsbeispiel eines Funktelefonsystems
         im Blockschaltbild und

Fig. 2   ein Signaldiagramm zur Erläuterung der Wirkungsweise.

Beschreibung des Ausführungsbeispiels

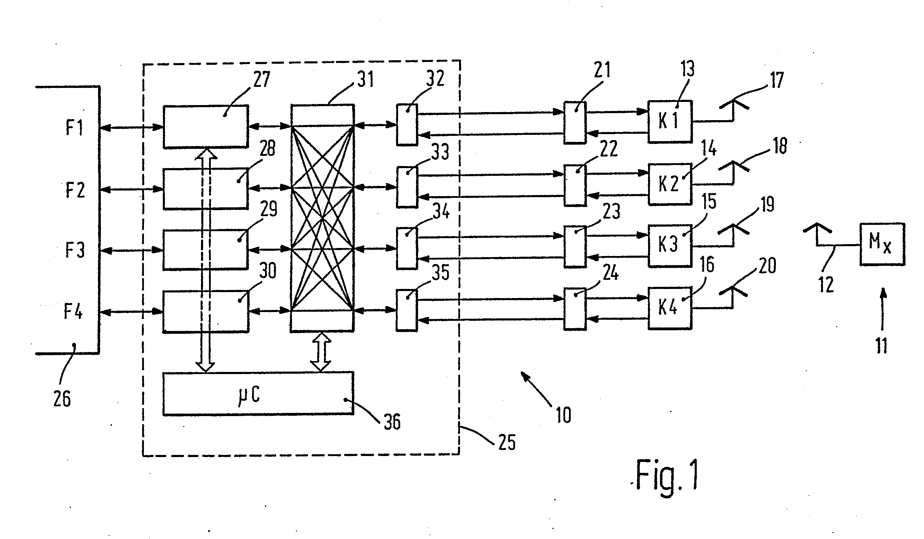

Das in Fig. 1 dargestellte Ausführungsbeispiel besteht aus
einer ortsfesten Anlage 10 mit vier Funkkanälen K1 bis K4
sowie einer Vielzahl von mobilen Sende/Empfangsstationen 11,
von denen zur Vereinfachung der Darstellung nur eine einzige dargestellt ist. Es handelt sich dabei um eine mikrorechnergesteuerte mobile Station Mx, die eine Speichereinrichtung aufweist und über eine Antenne 12 eine Funkverbindung zur ortsfesten Anlage 10 aufbauen kann.

Die ortsfeste Anlage besteht aus vier ortsfesten Sende/
Empfangsstationen 13 bis 16, denen die Funkkanäle K1 bis K4
zugeordnet sind. Daran angeschlossene Sende/Empfangsantennen
17 bis 20 ermöglichen eine Funkverbindung mit den mobilen
Stationen 11. Diese ortsfesten Stationen 13 bis 16 sind über
sogenannte Vier-Draht-Anpaßglieder-Empfänger 21 bis 24 und
eine Überleiteinrichtung 25 mit einem Telefonnetz 26 verbunden. Dieses Telefonnetz 26 weist vier Fernsprecheingänge
F1 bis F4 auf.

Die Überleiteinrichtung 25 weist vier Überleitstellen 27
bis 30 auf, die Bindeglieder zwischen den Fernsprecheingängen F1 bis F4 einerseits und den ortsfesten Sende/
Empfangsstationen andererseits darstellen. Dabei erfolgt die
Verbindung dieser Überleitstellen 27 bis 30 für die ortsfesten Stationen 13 bis 16 über eine Multiplexeinrichtung 31 und nachgeschaltete Vier-Draht-Anpaßglieder-Geber 32 bis 35,
die zusammen mit den Empfängern 21 bis 24 die Vier-Draht-
Übertragungen bilden. Zur Systemsteuerung sind sowohl die
Multiplexeinrichtung 31 als auch die Überleitstellen 27
bis 30 mit einem Mikrorechner 36 verbunden. Dabei können
selbstverständlich die Überleitstellen 27 bis 30 wie auch
die Multiplexeinrichtung 31 selbst Bestandteile des Mikrorechners sein. Durch den Mikrorechner 26 ist die Multiplexeinrichtung 31 so steuerbar, daß jeglicher Verbindungsaufbau zwischen den Fernsprecheingängen F1 bis F4 und den ortsfesten Stationen 13 bis 16 möglich ist. Weiterhin können
die durch die Überleitstellen 27 bis 30 geführten Signale
im Mikrorechner 36 erfaßt und bei Bedarf ausgewertet und
zwischengespeichert werden.

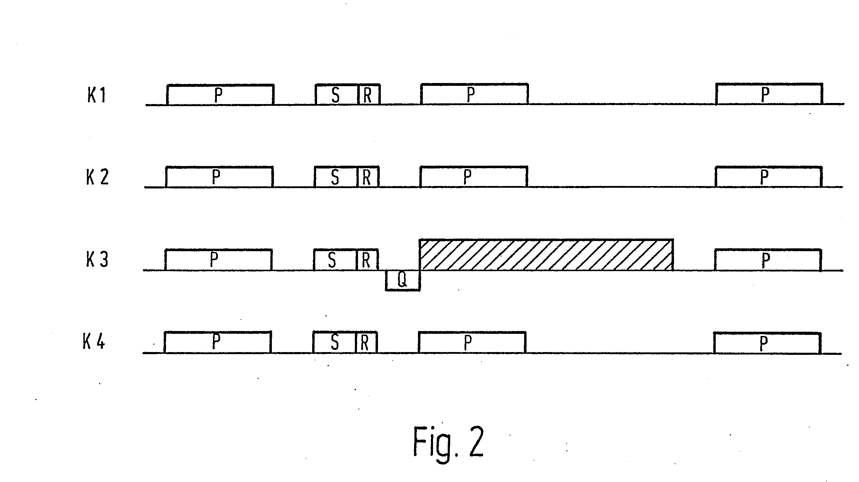

Die Wirkungsweise des in Fig. 1 dargestellten Ausführungsbeispiels soll im folgenden anhand des in Fig. 2 dargestellten Signaldiagramms näher erläutert werden.

Die mobilen Stationen 11 weisen eine zyklische Abtastvorrichtung für die Funkkanäle zur Anrufsuche (Scanner) auf.
Dies bedeutet, daß die im Ausführungsbeispiel beschriebenen
vier Funkkanäle K1 bis K4 nacheinander für jeweils ca.
100 ms eingeschaltet werden, um zu prüfen, ob ein Rufsignal
auf einem dieser Kanäle gesendet wird.

Zunächst soll der Fall beschrieben werden, daß ein Telefonteilnehmer über einen der Fernsprecheingänge F1 bis F4
eine bestimmte mobile Station 11 anrufen will, wobei in der
ortsfesten Anlage 10 keine Information vorliegt, über welchen Kanal die mobile Station 11 erreichbar ist. Es sei
hierbei vorausgeschickt, daß die ortsfeste Anlage 10 über
sämtliche Funkkanäle K1 bis K4 ständig in regelmäßigen Abständen Pilottöne P absendet (jeweils das erste und das
letzte Signal P in Fig. 2). Diese Pilottöne werden je nach Standort durch die mobilen Stationen 11 empfangen, wobei jede mobile Station 11 den Pilotton des jeweils empfangenen Funkkanals einspeichert, um dadurch den Funkkanal zu kennzeichnen, über den eine Funkverbindung derzeit möglich ist. Wird seitens einer mobilen Station 11 eine Funkverbindung aufgebaut, so kann sofort derjenige Funkkanal verwendet werden, dessen Kennzeichen im Speicher steht. Werden Pilottöne mehrerer Funkkanäle in einer mobilen Station 11 empfangen, so können sie entweder alle eingespeichert werden, oder aber sie werden bezüglich ihrer Feldstärke gewertet, das heißt ihre Feldstärke wird gemessen und entweder der Pilotton mit der größten Feldstärke eingespeichert oder alle Pilottöne in der Reihenfolge ihrer Feldstärke. Dadurch ist es möglich, beim Aufbau einer Funkverbindung sofort den besten Funkkanal auszuwählen und - falls dieser belegt ist - den zweitbesten.

Gemäß Fig. 2 soll nun nach zyklisch abgesendeten Pilottönen P durch alle ortsfesten Stationen 13 bis 16 die Verbindung des bereits beschriebenen Telefonteilnehmers zu einer mobilen Station 11 hergestellt werden, deren Standort in der ortsfesten Anlage 10 nicht bekannt ist. Dazu werden nun zunächst über sämtliche ortsfesten Stationen 13 bis 16 Stoppsignale S für die Abtastvorrichtungen in den mobilen Stationen 11 abgesendet. In den mobilen Stationen 11 bleibt dadurch die zyklische Abtastvorrichtung für die Funkkanäle auf dem Funkkanal stehen, über den eine Verbindung zustande gekommen ist. Das dem Stoppsignal S nachfolgende Selektivrufsignal R spricht dann allerdings nur eine einzige zugeordnete mobile Station 11 an, die daraufhin ein Quittungssignal Q über den Funkkanal K3, über den die Funkverbindung zustande gekommen ist, zurücksendet. Dieses Quittunssignal Q gelangt in den Mikrorechner 36, der daraufhin über den Multiplexer 31 den Fernsprecheingang des Anrufers, zum Beispiel den Fernsprecheingang F2, mit der ortsfesten
Station 15 verbindet. Über diese Verbindung kommt nunmehr
eine Sprechverbindung zustande, die durch den schraffierten Bereich in Fig. 2 dargestellt ist. Die übrigen Fernsprecheingänge F1, F3 und F4 werden dann auf die freien
Funkkanäle K1, K2 und K4 umgeschaltet. Über diese freien
Funkkanäle wird dann unmittelbar nach dem Quittungssignal Q ein Pilotton P azyklisch abgesendet, das heißt
außerhalb des normalen Zyklus der regelmäßig erzeugten
Pilottöne. Diese Pilottöne bewirken, daß eventuell in
mobilen Stationen 11 gespeicherte Zuordnungen zum Funkkanal K3 gelöscht werden und eine neue Zuordnung zu einem
der freien Kanäle eingespeichert wird.

Der Aufwand kann dabei minimal gehalten werden, wenn für
die Stoppsignale und die Pilottöne dieselbe Frequenz gewählt wird. Dabei werden vorzugsweise die Pilottöne zur
Markierung der Sender-Versorgungsbereiche wenigstens
doppelt so lang abgestrahlt wie die Stoppsignale. Der
Grund hierfür liegt in der erhöhten Empfangssicherheit,
da der Pilotton nur in größeren Zeitabständen abgestrahlt
wird, während ein Selektivrufsignal mit vorangestelltem
Stoppsignal beispielsweise alle 5 Sekunden bis zur Meldung einer mobilen Station 11 wiederholt wird.

Kommt eine Verbindung zwischen einer ortsfesten Station 13
bis 16 sowie einer mobilen Station 11 zustande, so werden
der verwendete Funkkanal und das Kennzeichen der mobilen
Station 11, die diesen Funkkanal verwendet hat, in einer
Speichereinrichtung des Mikrorechners 36 abgelegt. Zusätzlich können auch die mobilen Stationen 11 in regelmäßigen
Abständen Funksignale an diejenige ortsfeste Station 13
bis 16 absenden, deren Kennzeichen in ihrem Speicher gespeichert ist. Das in der ortsfesten Station 13 bis 16 empfangene Signal wird dann lediglich dazu verwendet, im
Mikrorechner 36 eine Zuordnung der mobilen Station 11 zu
einem Funkkanal abzulegen. Soll nun ein Anruf vom Telefonnetz aus, zum Beispiel vom Fernsprecheingang F1 aus, an
eine bestimmte mobile Station 11 erfolgen, so werden die
Kennzeichen dieses Anrufs zunächst in den Mikrorechner 36
übertragen und im Speicher nachgesehen, ob eine Zuordnung
dieser mobilen Station 11 zu einem Funkkanal dort abgelegt
ist. Ist dies der Fall und ist der zugeordnete Funkkanal
zum Beispiel der Kanal K4, so wird durch den Mikrorechner 36
der Fernsprecheingang F1 über den Multiplexer 31 sofort mit
der ortsfesten Station 16 verbunden, ohne daß Stoppsignale S
und nachgeschaltete Selektivrufsignale R über die übrigen
Kanäle abgestrahlt werden.

Will nun eine mobile Station 11 über eine eingespeicherte
Kanalinformation einen Fernsprecheingang F1 bis F4 erreichen,
so gelangt die Wahlinformation vom funkseitigen Teil der
Überleitstelle 27 bis 30, die derzeit mit dem entsprechenden
Funkkanal in Verbindung steht, zum Mikrorechner 36. Dieser
veranlaßt dann die Durchschaltung zum entsprechenden Fernsprecheingang. Wenn sich der Telefonteilnehmer gemeldet hat,
geht die Anlage wieder in den stationären Zustand über. Sie
kann nun zum Beispiel durch erneute Belegung seitens eines
Telefonteilnehmers einen weiteren Selektivruf gemäß der vorherigen Beschreibung abstrahlen, wobei natürlich der oder
die belegten Funkkanäle dafür nicht in Betracht kommen.

10/82
EK/PLI Ve/Li
18. 3. 1982

ROBERT BOSCH GMBH, 7000 Stuttgart 1

Ansprüche

1. Funktelefonsystem mit mehreren ortsfesten und mehreren mobilen Sende/Empfangsstationen, wobei die ortsfesten Stationen über eine Überleiteinrichtung mit dem Telefonnetz in Verbindung stehen, dadurch gekennzeichnet, daß die mobilen Stationen (11) eine automatische, zyklische Abtastvorrichtung für die Funkkanäle (K1 bis K4) zur Anrufsuche aufweisen (Scanner), daß bei einem Anruf an eine mobile Station (11) alle ortsfesten Stationen (13 bis 16) ein Stoppsignal für die Abtastvorrichtung der mobilen Stationen, dem ein Selektivrufsignal für eine bestimmte mobile Station nachfolgt, absenden und daß alle freien Funkkanäle zu ihrer Erkennung durch die mobilen Stationen Pilottöne absenden, die in den mobilen Stationen gespeichert werden.

2. Funktelefonsystem nach Anspruch 1, dadurch gekennzeichnet, daß die Pilottöne der freien Funkkanäle zyklisch abgesendet werden.

3. Funktelefonsystem nach Anspruch 1 oder 2, dadurch gekennzeichnet, daß unmittelbar nach jedem Stoppsignal mit nachfolgendem Selektivrufsignal und erfolgter Quittung der angesprochenen Station auf einem bestimmten Funkkanal über die übrigen freien Funkkanäle (ortsfesten Stationen) Pilottöne abgesendet werden.

4. Funktelefonsystem nach einem der vorhergehenden Ansprüche, dadurch gekennzeichnet, daß das Stoppsignal und der Pilotton dieselbe Frequenz aufweisen.

5. Funktelefonsystem nach einem der vorhergehenden Ansprüche, dadurch gekennzeichnet, daß die Abstrahlung eines Pilottons wenigstens doppelt so lange dauert wie die Abstrahlung eines Stoppsignals.

6. Funktelefonsystem nach einem der vorhergehenden Ansprüche, dadurch gekennzeichnet, daß die empfangenen Pilottöne in den mobilen Stationen (11) bezüglich ihrer Feldstärke gewertet und gespeichert werden.

7. Funktelefonsystem nach einem der vorhergehenden Ansprüche, dadurch gekennzeichnet, daß ein Selektivrufsignal mit vorangestelltem Stoppsignal so lange wiederholt wird, bis ein Quittieren des Signals erfolgt.

8. Funktelefonsystem, insbesondere nach einem der vorhergehenden Ansprüche, dadurch gekennzeichnet, daß die Überleiteinrichtung (25) rechnergesteuert ist und eine Multiplexeinrichtung (31) aufweist, durch die jeder Fernsprecheingang (F1 bis F4) des Telefonnetzes (26) mit jeder ortsfesten Station (13 bis 16) bzw. mit jedem Funkkanal (K1 bis K4) verbindbar ist.

9. Funktelefonsystem nach Anspruch 8, dadurch gekennzeichnet, daß zum Aufbau einer Verbindung von einem Fernsprecheingang (F1 bis F4) zu einer mobilen Station (11) über alle Funkkanäle ein Selektivruf erzeugt wird und daß beim Eingang einer Quittung der angesprochenen mobilen Station über einen bestimmten Funkkanal die entsprechende ortsfeste Station mit dem Fernsprecheingang (F1 bis F4) verbunden wird, über den sich der Anrufsucher gemeldet hat.

10. Funktelefonsystem nach Anspruch 8 oder 9, dadurch gekennzeichnet, daß eine Zuordnung einer mobilen Station (11) zu einem Kanal, auf dem eine Verbindung erfolgte, in der Überleiteinrichtung (25) gespeichert wird und daß zum Aufbau einer Verbindung von einem Fernsprecheingang (F1 bis F4)
zu einer mobilen Station (11) die gespeicherte Zuordnung
abgefragt wird, wodurch dann unmittelbar über den Multiplexer (31) die Verbindung zur betreffenden ortsfesten
Station (13 bis 16) herstellbar ist.

11. Funktelefonsystem nach einem der Ansprüche 8 bis 10,
dadurch gekennzeichnet, daß zur Herstellung einer Multiplexverbindung (31) die übrigen Fernsprecheingänge (F1
bis F4) auf freie ortsfeste Stationen (13 bis 16) umgeschaltet werden.

Fig.1

0089473

Fig. 2